# EUROPEAN PATENT APPLICATION

(11) **EP 2 642 406 A1**
(43) Date of publication of application: **25.09.2013**
(21) Application number: 11840794.9
(22) Date of filing: 29.04.2011
(51) Int. Cl.: G06F 17/30, G06Q 50/00, H02K 1/32

(54) **VENTILATION SYSTEM FOR AN ELECTRIC MACHINE (VARIANTS)**

(30) Priority: 16.11.2010 RU 2010146618
(71) Applicant: Zakrytoe Aktsionernoe Obshchestvo "Neft'stal'konstruktsiya", Moscow 115114 (RU)
(72) Inventor: SHALAEV, Vladimir Grigor'evich, St.Petersburg 197022 (RU)
(74) Representative: Spengler, Robert
(86) International application number: PCT/RU2011/000287
(87) International publication number: WO 2012/067538

(57) **Abstract**

A package of technical solutions presented herein relates to the electric machine industry and is designed for use in the ventilation system of a large electrical machine, for example, a high-power turbine generator with air-cooled stator and rotor. The object of the submitted technical solutions is the provision of efficient cooling for all the active parts of electrical machine with the possibility to increase the electrical machine unit capacity, while maintaining the design simplicity. Electrical machine consists of the rotor, stator with sub-slot ventilation ducts and radial ventilation ducts. According to the vent fingers' design radial ducts are divided into two type; ducts of the first type are equipped with vent fingers blocking the cooling air inflow to the sub-slot-ducts at the periphery thereof, and the within the ducts of the other type they block the air inflow at the side of the stator back and body interspace; groups of the ducts of each type form the axial alternating ventilation zones, the borders of which are provided with the ring separating units mounted in the gap, and the rotor is provided with ventilation ducts, each of which is connected with the ventilation zones mentioned above. In the second variant of solution, radial ventilation ducts closed at the side of the gap are alternating in the axial direction with the radial ventilation ducts opened to the gap and divided into two types depending on the vent fingers' design. 2 unpatented claims, 4 depending claims, 6 figures.

## Description

### Field of invention

A package of technical solutions presented herein relates to the electric machine industry and is designed for use in the ventilation system of a large electrical machine, for example, a high-power turbine generator with air-cooled stator and rotor.

### Prior art

Ventilation system of an electrical machine [1] with stator core made with the ventilation ducts opened to the gap is well known. Ring-shaped spacers of the body at the stator back form the alternating delivery and depression annular zones. Rotor is manufactured with ventilation ducts opened to the gap. Outer surface of rotor is provided with separating elements forming the ring annular zones communicated with the delivery and depression zones. These zones are communicated with rotor ventilation ducts. The principal advantage of this ventilation system is that the fans head is partially used to provide the cooling air flow within the rotor ventilation ducts. However, such system has significant structural complexity due to a large number of ducts and cross-over tubes, and therefore, it is rather inefficient in case of air cooling used, since it fails to provide the intensive cooling air flow towards the electrical machine end zones suffering maximum heating.

Multi-flow ventilation system of the electrical machine with stator longitudinal sectionalization [2], where the cooling air flow coming out to the gap out of the rotor under-slot ducts and radial holes is separated from the stator pressure area by the spacer mounted on the stator core, is also known. Stator pressure area is connected to the rarefaction zone with the axial holes in the spacer. The system excludes reciprocal stagnation of the outgoing flows from rotor and stator, but it is inefficient for cooling of end zones of electrical machine stator active parts.

Prototype of the claimed invention variants is the ventilation system of the electrical machine [3], consisting of the stator core winding and rotor. Cooling air flow circulates through the stator back and tooth area down the core radial ducts formed with straight spacers and U-shaped vent fingers, and goes at a high speed along the sub-slot ducts to the core end parts. Such design is rather simple in construction and provides efficient cooling of the stator active parts, especially the hottest end parts, but the gap overlapping preventing the connection with rotor provides no opportunity to use the fans head to arrange the inside-rotor air circulation. This problem makes it impossible to use such ventilation system for the high-power machines with long rotor, where the section of holes (for example, sub-slot ducts) made in the rotor body ends is inappropriate and insufficient for rotor efficient cooling.

The object of the submitted technical solutions is the provision of efficient cooling for all the active parts of electrical machine with the possibility to increase the electrical machine unit capacity, while maintaining the design simplicity.

### Disclosure of the invention

As for the first variant of the claimed invention the problem is solved due to the fact that the described above ventilation system of the electrical machine consisting of the rotor, gap, stator with sub-slot ventilation ducts and radial ventilation ducts formed with vent fingers, opened to the space between the stator body and back, such radiation ventilation ducts are opened to the gap and are divided into two types according to the vent fingers types; ventilation ducts of the first type include vent fingers blocking the cooling air inflow to the sub-slot ducts at the periphery thereof, and within the other type ventilation ducts the cooling air inflow is blocked at the side of the stator body and back interspace; the groups of each type ducts form the axial alternating ventilation zones, with ring separating units installed in the gap at the zone borders, and the rotor is provided with ventilation ducts, each of which is connected with the ventilation zones mentioned above.

The object fixed for the second variant of the invention is achieved due to the fact that within the described above ventilation system of the electrical machine consisting of the rotor, gap, stator with sub-slot ventilation ducts and radial ventilation ducts formed with vent fingers, opened to the space between the stator body and back and closed to the gap side, provided with the spacers in the stator tooth area, U-shaped and covering sub-slot ventilation ducts, the said radial ventilation ducts closed from the gap side alternate in the axial direction with additional radial ventilation ducts, made in the stator, opened to the gap and to the stator back and body interspace, such ducts being divided depending on the vent fingers design into two types: first type ducts contain vent fingers blocking the cooling air inflow to the sub-slot ducts at the periphery thereof, and within the other type ventilation ducts the cooling air inflow is blocked at the side of the stator body and back interspace, the groups of each type ducts form the axial alternating ventilation zones, with ring separating units installed in the gap at the zone borders, and the rotor is provided with ventilation ducts, each of which is connected with the ventilation zones mentioned above.

For both design variants ring separating units are fastened to the rotor or the stator, and the vent fingers, blocking the cooling air inflow to the sub-slot ventilation ducts from the side of the stator back and body interspace, can be provided with bypass openings, or the stator back can be provided with axial holes.

Novelty of the claimed invention of the electrical machine ventilation system as compared with the prototype, for both variants of the design solution, consists in the provision of axial alternation of the delivery and depression ventilation zones inside the stator core with inclusion into the ventilations scheme of the stator axial ducts and rotor ducts connected with the said ventilation zones, and optional for the second variant - the alternation of radial ventilation ducts opened at the gap side with those opened to the gap.

The background art showed no features related to installation of vent fingers, which in certain particular zones should block the cooling air inflow towards the sub-slot ventilation ducts at the periphery thereof, and in the other zones - at the side of the stator back and body interspace, with stator radial ventilation ducts opened to the gap. No previous claim of a group of radial ventilation ducts closed at the gap side, known from the prototype, and provided with additional radial ventilation ducts opened to the gap, was revealed, either. Moreover, no feature, related to bypass openings in the vent fingers blocking the sub-slot ducts at the side of the stator back, was revealed in the background art. Therefore, it may be concluded that the technical solution claimed as an invention meets all the patentability criteria as having the inventive level. Such features known from the background art as "ring separating unit in the gap" and "axial hole in the stator back", combined with the novel features, should increase the efficiency of cooling of rotor and stator back, respectively.

### Brief Description of the Drawings

The claimed invention is illustrated by the drawings, where

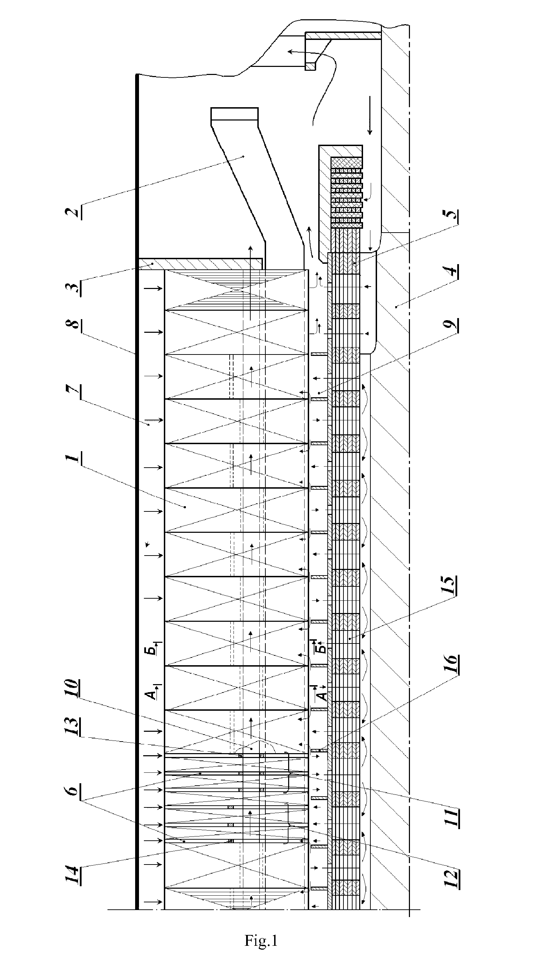

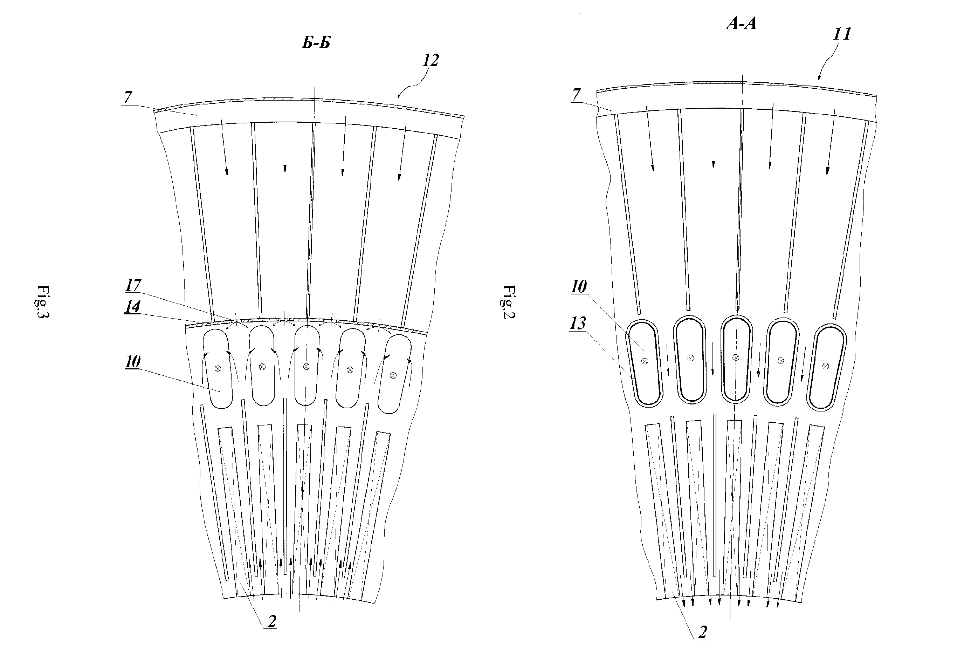

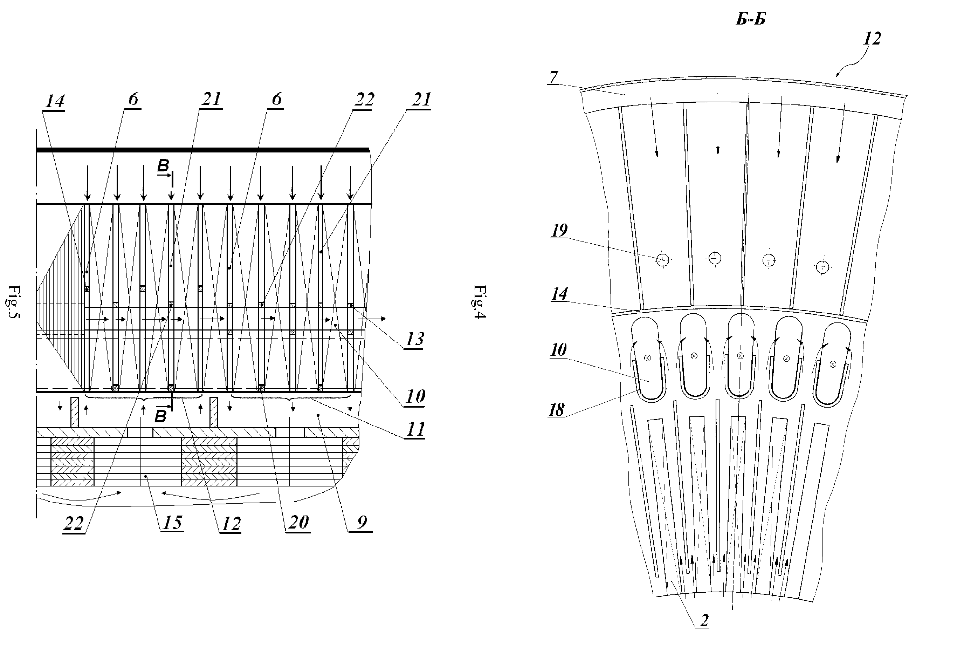

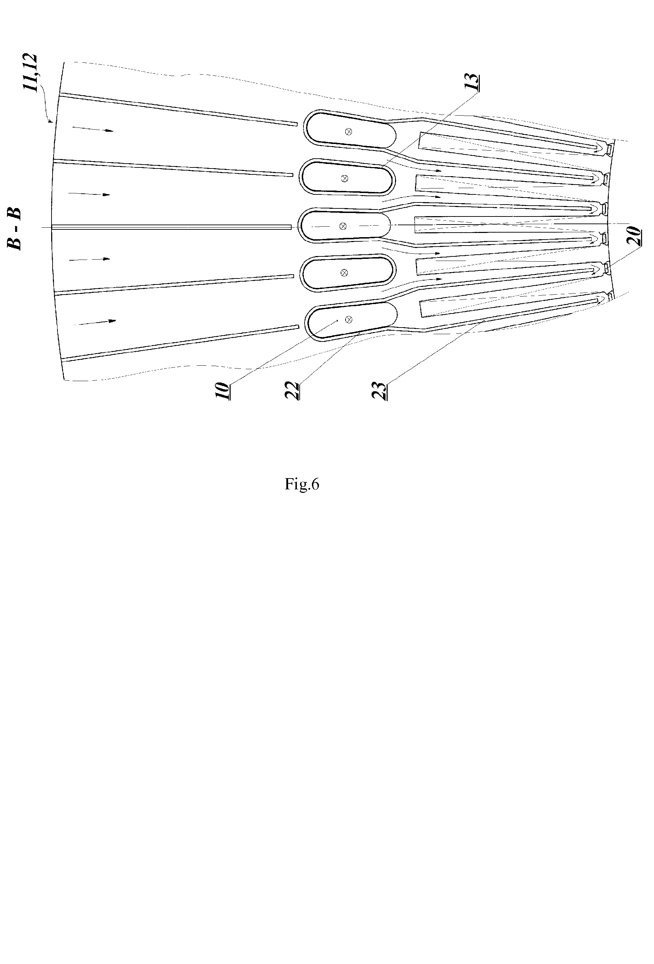

Fig. 1 represents the general view of the electrical machine, Fig. 2 and Fig. 3 show cross sections of the neighboring ventilation zones, Fig. 4 is a Fig. 3 version with vent fingers, Fig. 5 represents a fragment of the electrical machine general view, Fig. 6 shows the Fig. 5 section.

Ventilation system of the electrical machine, for example, air-cooled turbine generator, consists of the stator with a core 1, winding 2, end plate 3 and rotor 4 with winding 5 (see Fig. 1). Stator core 1 includes radial ventilation ducts 6, opened to the space 7 between the body 8 and the core 1, as well as to the gap 9, and sub-slot ventilation ducts 10. In the axial direction the stator core 1 is divided to the alternating ventilation zones 11 and 12. Within ventilation zones 11 sub-slot ducts 10 are provided along the periphery with vent fingers 13. Within ventilation zones 12 vent fingers 14 are installed, which block the air inflow along the radial ventilation ducts 6 to sub-slot ducts 10 from the side of the space 7. Rotor 4 is provided with ventilation ducts 15, each of which is formed by the radial slits in winding 5 of rotor 4 and sub-slot slits in rotor 4 body. Thus, each ventilation duct 15 is opened to the neighboring ventilation zones 11 and 12. Gap 9 at the borders of ventilation zones 11 and 12 contains ring separating units 16, which can be fastened to the rotor 4 (see Fig. 1), or to the stator core 1 bore. Section of ventilation zone 11 with spacers 13 is presented in Fig. 2. Section of ventilation zone 12 with spacers 14 is presented in Fig. 3. Spacers 14 can be provided with bypass openings 17 for the purpose of local air by-pass from the core 1 back towards the sub-slot ducts 10 of the stator. Ventilation zone 12 can be equipped with vent fingers 18 (see Fig. 4), which provide no blocking to sub-slot ducts inlet 10 within zone 12. As a variant of the core 1 back local ventilation: stator back along the whole length can be provided with axial ducts 19. Optional variant of the ventilation system: (see Fig. 5) radial ventilation ducts 21 closed at the gap side with the tangential spacers 20 are placed alternating to the opened ventilation ducts 6. Within ducts 21 sub-slot ventilation ducts 10 are provided with U-shaped vent fingers 22, side elements 23 (see Fig. 6) of which are turned to the gap. Optimal variant of placing of radial ventilation ducts 21 closed at the gap side is the alternation thereof with each radial ventilation duct 6 within each ventilation zone 11 and 12.

According to the first design variant, the electrical machine is vented in the following way. The cooling air (at the drawings air flow is arrowed) from the space 7 enters radial ducts 6. Within ventilation zones 11 the air does through the back of the stator core 1, then, via sub-slot ducts 10 closed with spacers 13, along the tooth area of the stator core 1 with winding 2 enters gap 9. From gap 9 the air comes to ventilation ducts 15 of rotor 4, cools active parts of rotor and is discharged through the gap 9 of ventilation zone 12. Then the air through the core 1 tooth area goes to the stator sub-slot ducts 10, cools the end part of the stator (core 1 end packages 1, end plate 3, end coil 2 of the stator) and approaches the fan. Partial air by-pass from zone 11 to the zone 12 is provided through the clearance (no mark at the drawings) between the separating units 16 and the stator core 1 bore. Cooling air coming from the space 7 to radial ducts 6 of the ventilation zone 12 goes through the stator core 1 back, and via bypass openings 17 in vent fingers 14 enters the sub-slot duct 10 and then the stator end part. The design variant, where the air goes through the core 1 back and along the axial ducts 19 enters the stator end part, is optional.

According to the second variant of design solution, ventilation of the electrical machine with radial ducts 6 opened to the gap is carried out similar to the first variant of solution. Ventilation with the radial ducts 21 closed to the gap side is provided as the following. The air coming to ducts 21 from the space 7 passes through the core back to the tooth area, goes round the side elements 23 of U-shaped spacers 22 and enters sub-slot ducts 10.

Insertion of ventilation ducts 21 closed at the gap side to the zones 11 and 12 makes it possible to remove a certain part of heat generated within the stator core, winding, at the rotor surface and within the gap. Thus, the temperature of the stator winding within zones 12 can be reduced for 20-25°C, and the rotor winding temperature can be reduced for about 10°C.

Ventilation system described herein affords an opportunity to provide intensive cooling of all the active parts of the high-power electrical machine, and to achieve the more uniform temperature distribution along the full length of the stator and the rotor. Air differential pressure between the zones 11 and 12 is provided with the fans mounted at the rotor, which allows to reach, by selection of the appropriate fans, the optimal differential pressure and effective ventilation of a long rotor typically used in high-power turbine generators. The design solution presented herein is distinguished by the structural simplicity and production effectiveness.

Considered sources of information:
1. Patent US3265912, applicant: Westinghouse, H02K3/246 H02K9/00, priority dated as of 15.06.64, published on 09.08.66.
2. Patent JP62236340, applicant: Hitachi, H02K1/20, priority dated as of 07.04.86, published on 16.10.87.
3. Patent RU2246786, applicant: Leningrad Electric Machine Building Plant, H02K9/08, priority dated as of 09.07.2003, published on 20.02.2005.

## Claims

1. Electrical machine ventilation system consisting of rotor, gap, stator with sub-slot ventilation ducts and radial ventilation ducts formed with the vent fingers and opened to the space between the stator back and body, **characterized in that** radial ventilation ducts are opened to the gap and depending on the vent fingers' design are divided into two types; ducts of the first type are equipped with vent fingers blocking the cooling air inflow to the sub-slot-ducts at the periphery thereof, and the within the ducts of the other type they block the air inflow at the side of the stator back and body interspace; groups of the ducts of each type form the axial alternating ventilation zones, the borders of which are provided with the ring separating units mounted in the gap, and the rotor is provided with ventilation ducts, each of which is connected with the ventilation zones mentioned above.

2. Electrical machine ventilation system as presented in claim 1, **characterized in that** the ring separating units are fastened to the rotor.

3. Electrical machine ventilation system as presented in claim 1, **characterized in that** the ring separating units are fastened to the stator.

4. Electrical machine ventilation system as defined in claims 1, 2, 3, **characterized in that** the vent fingers blocking the cooling air inflow towards the sub-slot ventilation ducts from the side of the stator back and body interspace are provided with bypass openings.

5. Electrical machine ventilation system as defined in claims 1, 2, 3, **characterized in that** the stator back is provided with axial holes.

6. Electrical machine ventilation system consisting of rotor, stator with radial ventilation ducts formed with the vent fingers, opened to the stator body and back interspace and closed at the side of the gap, with U-shaped spacers located in the stator tooth area and covering the sub-slot ventilation ducts, **characterized in that** the radial ventilation ducts closed at the side of the gap are alternating in the axial direction with the additional radial ventilation ducts made in the stator, opened to the gap and to the stator back and body interspace; such ducts are divided into two types depending on the vent fingers' design; ducts of the first type are equipped with vent fingers blocking the cooling air inflow to the sub-slot-ducts at the periphery thereof, and the within the ducts of the other type they block the air inflow at the side of the stator back and body interspace; groups of the ducts of each type form the axial alternating ventilation zones, the borders of which are provided with the ring separating units mounted in the gap, and the rotor is provided with ventilation ducts, each of which is connected with the ventilation zones mentioned above.

7. Electrical machine ventilation system as presented in claim 6, **characterized in that** the right separating units are fastened to the rotor.

8. Electrical machine ventilation system as presented in claim 6, **characterized in that** the right separating units are fastened to the stator.

9. Electrical machine ventilation system as defined in claims 6, 7, 8, **characterized in that** the vent fingers blocking the cooling air inflow towards the sub-slot ventilation ducts from the side of the stator back and body interspace are provided with bypass openings.

10. Electrical machine ventilation system as defined in claims 6, 7, 8, **characterized in that** the stator back is provided with axial holes.
